# EUROPÄISCHE PATENTANMELDUNG

(11) **EP 3 543 271 A1**
(43) Veröffentlichungstag der Anmeldung: **25.09.2019**
(21) Anmeldenummer: 18163625.9
(22) Anmeldetag: 23.03.2018
(51) Int. Cl.: C08G 18/72, C08G 18/73, C08G 18/75, C08G 18/79, C08G 18/02, C08G 18/08, C08G 18/28, C08G 18/24, C08G 18/32, C08G 18/42, C09D 175/06

(54) **WÄSSRIGE URETDIONGRUPPENHALTIGE ZUSAMMENSETZUNGEN UND VERFAHREN ZU DEREN HERSTELLUNG**

(71) Anmelder: Covestro Deutschland AG, 51373 Leverkusen (DE)
(72) Erfinder: Die Erfindernennung liegt noch nicht vor
(74) Vertreter: Levpat

(57) **Zusammenfassung**

Die vorliegende Erfindung betrifft wässrige uretdiongruppenhaltige Zusammensetzungen, umfassend oder bestehend aus,
(A) mindestens einen uretdiongruppenhaltigen Härter, basierend auf aliphatischen, cycloaliphatischen, araliphatischen und/oder aromatischen Polyisocyanaten, welcher keine chemisch gebundenen hydrophilierenden Gruppen enthält;
(B) mindestens ein Hydroxygruppen enthaltendes Polyol, welches mindestens eine chemisch gebundene Carbonsäuregruppe enthält;
(C) gegebenenfalls Lösemittel; und
(D) gegebenenfalls Hilfs- und Zusatzstoffe;
wobei das Mengenverhältnis der Komponenten (A) und (B) so bemessen ist, dass das molare Verhältnis von den als Uretdion vorliegenden NCO-Gruppen des Härters (A) zu NCOreaktiven Gruppen des Polyols (B) 3,0 : 0,5 bis 0,5 : 3,0 beträgt und wobei A und B als physikalische Mischung vorliegen.

Darüber hinaus betrifft die Erfindung ein Verfahren zur Herstellung einer Polyurethanschicht unter Verwenden der wässrigen uretdiongruppenhaltigen Zusammensetzung der vorliegenden Erfindung, die daraus erhaltene Polyurethanschicht und ein Substrat, welches mit dieser Polyurethanschicht beschichtet oder verklebt ist.

## Beschreibung

Die vorliegende Erfindung betrifft wässrige uretdiongruppenhaltige Zusammensetzungen, umfassend oder bestehend aus,
(A) mindestens einen uretdiongruppenhaltigen Härter, basierend auf aliphatischen, cycloaliphatischen, araliphatischen und/oder aromatischen Polyisocyanaten, welcher keine chemisch gebundenen hydrophilierenden Gruppen enthält;
(B) mindestens ein Hydroxygruppen enthaltendes Polyol, welches mindestens eine chemisch gebundene Carbonsäuregruppe enthält;
(C) gegebenenfalls Lösemittel; und
(D) gegebenenfalls Hilfs- und Zusatzstoffe;
   wobei das Mengenverhältnis der Komponenten (A) und (B) so bemessen ist, dass das molare Verhältnis von den als Uretdion vorliegenden NCO-Gruppen des Härters (A) zu NCOreaktiven Gruppen des Polyols (B) 3 : 0,5 bis 0,5 : 3 beträgt und wobei A und B als physikalische Mischung vorliegen.

Darüber hinaus betrifft die Erfindung ein Verfahren zur Herstellung einer Polyurethanschicht unter Verwenden der wässrigen uretdiongruppenhaltigen Zusammensetzung der vorliegenden Erfindung, die daraus erhaltene Polyurethanschicht und ein Substrat, welches mit dieser Polyurethanschicht beschichtet oder verklebt ist.

In den letzten Jahren stieg die Bedeutung wässriger Lacke und Beschichtungsmittel aufgrund immer strengerer Emissionsrichtlinien bezüglich der bei der Lackapplikation freiwerdenden Lösemittel stark an. Obwohl inzwischen bereits für viele Anwendungsbereiche wässrige Lacksysteme zur Verfügung stehen, können diese das hohe Qualitätsniveau konventioneller, lösemittelhaltiger Lacke hinsichtlich Lösemittel- und Chemikalienbeständigkeit oder auch Elastizität und mechanischer Belastung oftmals nicht erreichen. Insbesondere sind bislang noch keine aus wässriger Phase zu verarbeitende Beschichtungsmittel auf Polyurethanbasis bekannt geworden, die den hohen Forderungen aus der Praxis in ausreichendem Maß genügen. Diese Feststellung gilt sowohl für die DE 4001783 A1, die sich mit speziellen anionisch modifizierten aliphatischen Polyisocyanaten befasst, als auch für die Systeme der DE 2456469 A1, der DE 2814815 A1, der EP 0012348 A1 und der EP 0424697 A1, die wässrige, einkomponentige Einbrennlackbindemittel auf Basis von blockierten Polyisocyanaten und organischen Polyhydroxylverbindungen beschreiben.

In den letzten Jahren sind weitere Verbesserungen der einkomponentigen Einbrennlackbindemittel auf Basis von blockierten Polyisocyanaten erzielt worden, wie z.B. in der EP 0576952A beschrieben.

Die obigen, dem Stand der Technik entsprechenden, einkomponentigen, auf blockierten Polyisocyanaten basierenden, Einbrennlackbindemittel haben den Nachteil, dass, auch wenn die weitgehend lösemittelfrei sind, beim Einbrennen dieser Lackbindemittel die jeweiligen Blockierungsmittel frei gesetzt werden, was wiederum zu Emissionen beiträgt. Daher bestand seit Langem ein Bedarf im Markt, wässrige, emissionsfreie einkomponentige Einbrennlackbindemittel zu entwickeln. Es hat nicht an Versuchen gemangelt, solche Einbrennlackbindemittel auf Basis von Abspalter-freien, Uretdion haltigen Polyisocyanaten herzustellen.

Gemäß der EP 1687354 A1 können wässrige Uretdion haltige Dispersionsbeschichtungen hergestellt werden, indem eine feste Uretdionverbindung mit einem geschmolzenen, wasserdispergierbaren Harz vereinigt wird, das wasserdispergierbare Harz, falls erforderlich, gesalzen wird und die Harzmischung in Wasser dispergiert wird. Das geschmolzene, wasserdispergierbare Harz kann eine Funktionalität aufweisen, die mit der Uretdionverbindung reaktiv ist, oder die Beschichtungszusammensetzung kann ein weiteres wasserdispergierbares Harz mit einer mit der Uretdionverbindung reaktiven Funktionalität enthalten. Im Beispiel wurde allerdings ein Epoxy-Harz verwendet. Es ist allgemein bekannt, dass die Epoxylacke den Polyurethanlacken in meisten Eigenschaften unterlegen sind. Laut der EP 1687354 A1 ist auch erforderlich, dass zur Herstellung dieser Dispersionsbeschichtungen ein zusätzlicher Emulgator eingesetzt wird, was die Lackeigenschaften der Dispersionsbeschichtungen weiter beeinträchtig. Darüber hinaus ist die in der EP 1687354 A1 beschriebene Herstellmethode mit einer sehr hohen thermischen Belastung für die Uretdion-Gruppen verbunden, welche in der Praxis höchst wahrscheinlich zu einem Verlust der Uretdion-Gruppen führen würde. Ferner wurden die in der EP 1687354 A1 beschriebenen Dispersionen direkt nach Herstellung sofort appliziert. Es fehlen in der EP 1687354 A1 jegliche Angaben zur Stabilität dieser Dispersionen.

In der US 4496684 A wurden Uretdiongruppen enthaltende Polyurethanoligomere beschrieben, die durch Umsetzen eines Hydroxyl-terminierten Präpolymers mit einem Dicarbonsäureanhydrid hergestellt wurden. In dieser Druckschrift liegt keine wässrige Zusammensetzung vor in der der uretdiongruppenhaltige Härter und das Polyol als physikalische Mischung vorliegen.
Weitere Beispiele im Wasser dispergierbarer hydrophiler Uretdion haltiger Polyisocyanaten findet man z.B. in der DE 2538484 A1 und der DE 10 2005 036 654 A1. In beiden Schriften wurde eine hydrophilierende Gruppe (d.h. eine Carboxylgruppe) direkt in das Uretdion haltige Polyisocyanat eingebaut. Weder die DE 2538484 A noch die DE 10 2005 036 654 A1 machen Angaben zu der Stabilität dieser Dispersionen. Hier ist ebenfalls der Unterschied, dass keine physikalischen Mischungen eines spezifischen uretdiongruppenhaltigen Härters und eines spezifischen Polyols vorliegen.

Die US 2015232609A1 offenbart in Wasser dispergierbare hydrophile Uretdion haltige Polyisocyanate erhältlich durch Umsetzung eines Uretdiongruppen tragenden Präpolymers mit einem eine ionogene Gruppe umfassenden Emulgator, wobei die ionogene Gruppe entweder einen pKa Wert > 8 oder einen pKb > 8 im Wasser bei Raumtemperatur hat. Solche Uretdion haltige Umsetzungprodukte zeigten eine verbesserte Lagerstabilität von 8 Wochen bei Raumtemperatur, was aber immer noch für praktische Anwendungen in der Industrie, wo nicht selten mit langen Transportwegen gerechnet werden muss, unzureichend ist.

Die vorstehenden Probleme konnten überraschenderweise durch die Verwendung einer physikalischen Mischung des spezifischen Härters und des spezifischen Polyols der vorliegenden Erfindung gelöst werden. Insbesondere konnten Dispersionen erhalten werden, welche eine erhöhte Lagerstabilität im Vergleich zu den im Stand der Technik bekannten Zusammensetzungen aufweisen.

Die vorliegende Erfindung betrifft insbesondere:
1. Wässrige uretdiongruppenhaltige Zusammensetzungen, umfassend oder bestehend aus,
   (A) mindestens einen uretdiongruppenhaltigen Härter, basierend auf aliphatischen, cycloaliphatischen, araliphatischen und/oder aromatischen Polyisocyanaten, bevorzugt basierend auf basierend auf aliphatischen, cycloaliphatischen, und/oder araliphatischen Polyisocyanaten, besonders bevorzugt basierend auf aliphatischen, und/oder cycloaliphatischen Polyisocyanaten, welcher keine chemisch gebundenen hydrophilierenden Gruppen enthält;
   (B) mindestens ein Hydroxygruppen enthaltendes Polyol, welches mindestens eine chemisch gebundene Carbonsäuregruppe enthält;
   (C) gegebenenfalls Lösemittel; und
   (D) gegebenenfalls Hilfs- und Zusatzstoffe;
      wobei das Mengenverhältnis der Komponenten (A) und (B) so bemessen ist, dass das molare Verhältnis von den als Uretdion vorliegenden NCO-Gruppen des Härters (A) zu NCOreaktiven Gruppen des Polyols (B) von 3,0 : 0,5 bis 0,5 : 3,0 bevorzugt von 2,5 : 1,0 bis 1,0 : 2,5; besonders bevorzugt 2,0 : 2,0 bis 1,0 bis 1,0 : 2,0 beträgt und wobei (A) und (B) als physikalische Mischung vorliegen.
2. Wässrige uretdiongruppenhaltige Zusammensetzung nach Aspekt 1, dadurch gekennzeichnet, dass
   der mindestens eine uretdiongruppenhaltige Härter (A) durch Umsetzen von monomeren Isocyanaten umfassend oder bestehend aus mindestens einem monomeren Isocyanat ausgewählt aus Tetramethylen-diisocyanat, Cyclohexan-1,3- und 1,4-diisocyanat, Pentamethylendiisocyanat, Hexamethylendiisocyanat (HDI), 1-Isocyanato-3,3,5-trimethyl-5-isocyanatomethylcyclohexan (Isophorondiisocyanat IPDI), Dicyclohexylmethan-2,4'- und/oder 4,4'-diisocyanat, Tetramethylxylylendiisocyanat (TMXDI), Triisocyanatononan, Toluylendiisocyanat (TDI), Diphenylmethan-2,4'-und/oder 4,4'-diisocyanat (MDI), Triphenylmethan-4,4'-diisocyanat oder Naphthylen-1,5-diisocyanat oder Mischungen davon, bevorzugt aus Isophorondiisocyanat, Dicyclohexylmethan-2,4'-und/oder 4,4'-diisocyanat oder Hexamethylendiisocyanat erhalten wurde.
3. Wässrige uretdiongruppenhaltige Zusammensetzung nach Aspekt 1 oder 2, dadurch gekennzeichnet, dass
   als Einsatzstoffe für den mindestens eine uretdiongruppenhaltigen Härter (A) hydroxylgruppenhaltige Monomere und/oder Polymere eingesetzt werden.
4. Wässrige uretdiongruppenhaltige Zusammensetzung nach einem der vorstehenden Aspekten, dadurch gekennzeichnet, dass
   der mindestens eine uretdiongruppenhaltige Härter (A) einen freien NCO-Gehalt von weniger als 5 Gew.-% und einen Gehalt an Uretdiongruppen von 1 bis 18 Gew.-% (berechnet als C₂N₂O₂, Molekulargewicht 84 g/mol) aufweist.
5. Wässrige uretdiongruppenhaltige Zusammensetzung nach einem der vorstehenden Aspekten, dadurch gekennzeichnet, dass
   die wässrige Zusammensetzung eine Säurezahl von 1 bis 100 mg KOH/g, bevorzugt 2 bis 50 mg KOH/g, stärker bevorzugt 5 bis 30 mg KOH/g, bevorzugt gemessen nach DIN EN ISO 2114: 2002-06 mit Aceton und Ethanol im Gewichtsverhältnis 2:1 als Lösungsmittel, und berechnet auf Feststoffgehalt aufweist.
6. Wässrige uretdiongruppenhaltige Zusammensetzung nach einem der vorstehenden Aspekten, dadurch gekennzeichnet, dass
   das mindestens eine Hydroxygruppen enthaltende Polyol (B) durch Umsetzen von Hydroxy- oder Aminocarbonsäuren umfassend oder bestehend aus mindestens einer Carbonsäure ausgewählt aus 2,2-Dimethylolessigsäure, 2,2-Dimethylolbuttersäure, 2,2-Dimethylolpentansäure, Dihydroxybernsteinsäure, α,Ω-Diaminovaleriansäure, oder Mischungen davon, bevorzugt aus Dimethylolpropionsäure oder Hydroxypivalinsäure, erhalten wurde.
7. Wässrige uretdiongruppenhaltige Zusammensetzung nach einem der vorstehenden Aspekten, dadurch gekennzeichnet, dass
   das mindestens eine Hydroxygruppe enthaltende Polyol (B) einen OH-Gehalt größer 1 Gew.-% (als OH-Gruppe auf Festgehalt berechnet, Molekulargewicht 17 g / mol) und ein zahlenmittleres Molekulargewicht Mn von 500 bis 20000 g/mol aufweist.
8. Wässrige Uretdiondispersion nach einem der vorstehenden Aspekten, dadurch gekennzeichnet, dass
   das Lösemittel ausgewählt ist aus Aceton, Methylethylketon, Ethylacetat, Butylacetat, Xylol, Schwerbenzol, wie die kommerziell erhältlichen Solvesso 100 oder Solvesso 150, Propylenglykolmono-n-butylether, Dipropylenglykol dimethylether, Methoxypropylacetat, dibasischen Estern oder Mischungen davon.
9. Wässrige Uretdiondispersion nach einem der vorstehenden Aspekten, dadurch gekennzeichnet, dass
   die Hilfs- und Zusatzstoffe ausgewählt sind aus der Gruppe Verlaufsmittel, zum Beispiel Polysilicone oder Acrylate, Lichtschutzmitteln, zum Beispiel sterisch gehinderte Amine, Katalysatoren, zum Beispiel Zinn (II) 2-ethylhexanoat oder Dibutylzinndilaurat, Füllstoffen und Pigmenten, wie zum Beispiel Titandioxid, oder Mischungen davon.
10. Wässrige uretdiongruppenhaltige Zusammensetzung nach einem der vorstehenden Aspekten, dadurch gekennzeichnet, dass
   die Summe der Gewichts-Anteile von (A), (B) und (D) 30 bis 60 Gew.-%, bezogen auf den Feststoffgehalt der gesamten wässrigen Zusammensetzung, beträgt.
11. Verfahren zur Herstellung einer Polyurethanschicht, umfassend die Schritte
   i) Bereitstellen einer wässrigen uretdiongruppenhaltige Zusammensetzung gemäß einem der Aspekten 1 bis 10;
   ii) Aufbringen der unter i) erhaltenen Mischung auf ein Substrat;
   iii) Trocknen der Mischung aus Schritt ii), und
   iv) Härten der Mischung aus Schritt iii) unter Wärmezufuhr von 40 °C bis 180 °C für bis zu 180 Minuten.
12. Verfahren nach Aspekt 11, dadurch gekennzeichnet, dass die wässrigen uretdiongruppenhaltige Zusammensetzung durch Vermischen des uretdiongruppenhaltigen Härters (A) mit dem mindestens eine Hydroxygruppe enthaltenden Polyol (B) in Abwesenheit von Wasser und anschließender Dispergierung mit Wasser erhalten wurde.
13. Polyurethanschicht, insbesondere Polyurethanfilm, erhältlich durch ein Verfahren nach Aspekt 11 oder 12.
14. Ein Substrat, welches mit der Polyurethanschicht nach Aspekt 13 beschichtet oder verklebt ist.

Das durchschnittliche Molekulargewicht ist gemäß dieser Erfindung als das zahlenmittlere Molekulargewicht Mn definiert, falls nicht explizit anders angegeben. Mn wird mittels Gelpermeationschromatographie (GPC) bei 23 ° C in Tetrahydrofuran als Lösungsmittel bestimmt. Die Messung erfolgt wie in DIN 55672-1:2016-03 beschrieben: "Gelpermeationschromatographie, Teil 1 - Tetrahydrofuran als Elutionsmittel" (SECURITY GPC-System von PSS Polymer Service, Durchfluss 1,0 ml.

Falls nicht explizit anders angegeben beziehen sich in der vorliegenden Erfindung Gew.-% auf das Gesamtgewicht des jeweiligen Systems oder das Gesamtgewicht der jeweiligen Komponente. Zum Beispiel kann ein Copolymer, ein bestimmtes Monomer in Gew.-% angegeben enthalten, in diesem Fall würden sich die Gewichtsprozente auf das Gesamtgewicht des Copolymers beziehen.

Falls nicht explizit anders angegeben bezieht sich der Begriff "mindestens ein" auf die Art der Verbindungen und nicht auf einzelne Moleküle. Zum Beispiel ist mindestens ein Polyol so zu verstehen, dass mindestens eine Art von Polyol enthalten ist, dieses jedoch in einer willkürlichen Anzahl an Molekülen in der Zusammensetzung enthalten ist. Es können also auch zwei oder mehr Arten an Polyolen in jeweils willkürlicher Anzahl vorhanden sein, falls die Mengen nicht definiert sind.

In einer bevorzugten Ausführungsform ist die wässrige uretdiongruppenhaltige Zusammensetzung im Wesentlichen frei von einem weiteren Co-Emulgator (zusätzlich zu Komponente (B)). Der Begriff "im Wesentlichen frei von" gemäß der vorliegenden Erfindung ist so definiert, dass bevorzugt weniger als 1 Gew.-%, stärker bevorzugt weniger als 0,25 Gew.-%, noch stärker bevorzugt weniger als 0,1 Gew.-%, am stärksten bevorzugt weniger als 0,01 Gew.-% oder gar kein Anteil der jeweiligen Verbindung, jeweils bezogen auf das Gesamtgewicht der wässrigen uretdiongruppenhaltigen Zusammensetzung enthalten sind.

Die wässrige uretdiongruppenhaltige Zusammensetzung der vorliegenden Erfindung ist bevorzugt eine Zusammensetzung auf Polyurethanbasis.

Geeignete, Uretdiongruppen enthaltende Polyisocyanate als Ausgangsverbindungen für die Komponente (A) sind Polyisocyanate, die mindestens eine Isocyanatgruppe und mindestens eine Uretdiongruppe enthalten. Diese werden, wie beispielsweise beschrieben in WO 02/92657 A1 oder WO 2004/005364 A1 durch Reaktion geeigneter Ausgangsisocyanate (al) hergestellt. Dabei wird unter Katalyse, beispielsweise mit Triazolaten oder 4-Dimethylaminopyridin (DMAP) als Katalysatoren ein Teil der Isocyanatgruppen in Uretdiongruppen überführt. Beispiele für Isocyanate (a1), aus denen die Uretdion-haltigen Bausteine aufgebaut werden sind Tetramethylen-diisocyanat, Cyclohexan-1,3- und 1,4-diisocyanat, Pentamethylendiisocyanat, Hexamethylendiisocyanat (HDI), 1-Isocyanato-3,3,5-trimethyl-5-isocyanatomethylcyclohexan (Isophorondiisocyanat IPDI), Dicyclohexylmethan-2,4'-und/oder 4,4'-diisocyanat, Tetramethylxylylendiisocyanat (TMXDI), Triisocyanatononan, Toluylendiisocyanat (TDI), Diphenylmethan-2,4'-und/oder 4,4'-diisocyanat (MDI), Triphenylmethan-4,4'-diisocyanat oder Naphthylen-1,5-diisocyanat sowie beliebige Gemische derartiger Isocyanate. Bevorzugt sind Isophorondiisocyanat, Dicyclohexylmethan-2,4'-und/oder 4,4'-diisocyanat oder Hexamethylendiisocyanat.

Außer den Isocyanatgruppen und Uretdiongruppen kann die Komponente (A) auch Isocyanurat-, Biuret-, Allophanat-, Urethan- und/oder Harnstoff-Strukturen aufweisen.

Die Umsetzung dieser uretdiongruppentragenden Polyisocyanate zu Uretdiongruppen aufweisenden Härtern (A) beinhaltet die Reaktion der freien NCO-Gruppen der vorstehend genannten Polyisocyanate mit einer Polyolkomponente (b1), gegebenenfalls unter Mitverwendung der Polyolkomponente (b2).

Die Polyolkomponente (b1) weist bevorzugt eine Hydroxylgruppen-Funktionalität von ≥ 2 und ein Molekulargewicht Mₙ von 62 bis 500 g/mol, bevorzugt 62 bis 400 g/mol, besonders bevorzugt 62 bis 300 g/mol auf. Die Polyolkomponente (b1) enthält bevorzugt 2- bis 6-wertige Polyolkomponenten des Molekulargewichts Mn von 62 bis 500 g/mol, bevorzugt 62 bis 400 g/mol, besonders bevorzugt 62 bis 300 g/mol. Bevorzugte Polyolkomponenten (b1) sind beispielsweise 1,4- und/oder 1,3-Butandiol, 1,6-Hexandiol, 2,2,4-Trimethyl-1,3-pentandiol, Trimethylolpropan, Polyester- und/oder Polyetherpolyole des mittleren Molgewichts Mₙ von kleiner oder gleich 500 g/mol.

Geeignete lineare difunktionelle Polyole (b2) sind ausgewählt aus der Gruppe der Polyether, Polyester, Polycaprolactondiole und/oder Polycarbonate. Bevorzugt enthält die PolyolKomponente (b2) mindestens ein Estergruppen enthaltendes Diol des Molekulargewichts Mn von 350 bis 4000 g/mol, bevorzugt von 350 bis 2000 g/mol, besonders bevorzugt von 350 bis 1000 g/mol. Es handelt sich hierbei um das mittlere, aus der Hydroxylzahl berechenbare Molekulargewicht. Im Allgemeinen handelt es sich bei den Esterdiolen um Gemische, in denen in untergeordneten Mengen auch einzelne Bestandteile vorliegen können, die ein unter- oder oberhalb dieser Grenzen liegendes Molekulargewicht aufweisen. Es handelt sich um die an sich bekannten Polyesterdiole, die aus Diolen und Dicarbonsäuren aufgebaut sind.

Geeignete Diole sind beispielsweise 1,4-Dimethylolcyclohexan, 1,4- oder 1,3-Butandiol, 1,6-Hexandiol, Neopentylglykol, 2,2,4-Trimethyl-1,3-pentandiol, Trimethylolpropan sowie Pentaerythrit bzw. Gemische derartiger Diole. Geeignete Dicarbonsäuren sind beispielsweise aromatische Dicarbonsäuren wie Phthalsäure, Isophthalsäure und Terephthalsäure, cycloaliphatische Dicarbonsäuren wie zum Beispiel Hexahydrophthalsäure, Tetrahydrophthalsäure, Endomethylentetrahydrophthalsäure bzw. deren Anhydride und aliphatische Dicarbonsäuren, die bevorzugt Verwendung finden, wie Bernsteinsäure, Glutarsäure, Adipinsäure, Korksäure, Azelainsäure und Sebacinsäure oder deren Anhydride.

Polyesterdiole auf Basis von Adipinsäure, Phthalsäure, Isophthalsäure und Tetrahydrophthalsäure werden bevorzugt als Komponente (b2) verwendet. Als bevorzugte Diole werden beispielsweise 1,4- oder 1,3-Butandiol, 1,6-Hexandiol oder Trimethylolpropan sowie deren Mischungen eingesetzt.

Ebenfalls bevorzugt als Komponente (b2) sind Polycaprolactondiole des mittleren Molekulargewichts von 350 bis 4000 g/mol, bevorzugt von 350 bis 2000 g/mol, besonders bevorzugt von 350 bis 1000 g/mol, die in an sich bekannter Weise aus einem Diol oder Diolgemisch der oben beispielhaft genannten Art als Starter, und Lactonen wie beispielsweise β-Propiolacton, γ-Butyrolacton, γ- und δ-Valerolacton, ε-Caprolacton, 3,5,5- und 3,3,5-Trimethylcaprolacton oder beliebige Gemische solcher Lactone hergestellt worden sind. Besonders bevorzugt sind solche Polycaprolactondiole, die durch Polymerisation von ε-Caprolacton hergestellt worden sind.

Als lineare Polyolkomponente (b2) können auch (Co)polyether aus Ethylenoxid, Propylenoxid und/oder Tetrahydrofuran eingesetzt werden, die aus weniger als 30 Mol% aus Ethylenoxideinheiten bestehen. Bevorzugt sind Polyether mit einem mittleren Molgewicht Mn von 500 bis 2000 g/mol, wie z.B. Polypropylenoxide oder Polytetrahydrofurandiole.

Geeignet als (b2) sind auch hydroxylgruppenhaltige Polycarbonate, bevorzugt mittleren Molgewichts Mn von 400 bis 4000 g/mol, bevorzugt 400 bis 2000 g/mol wie zum Beispiel Hexandiolpolycarbonat sowie Polyestercarbonate.

Als Polyolkomponente (b2) bei der Herstellung der Uretdiongruppen aufweisenden Härter (A) können auch niedermolekulare Estergruppen aufweisende Diole eines mittleren, aus Funktionalität und Hydroxylzahl berechenbaren Molekulargewichts von 134 bis 349 g/mol, vorzugsweise 176 bis 349 g/mol, zum Einsatz kommen. Hierbei handelt es sich beispielsweise um die an sich bekannten, Estergruppen aufweisenden Diole oder Gemische solcher Diole, wie sie sich z. B. durch Umsetzung von Alkoholen mit unterschüssigen Mengen an Dicarbonsäuren, entsprechenden Dicarbonsäureanhydriden, entsprechenden Dicarbonsäureestern von niederen Alkoholen oder Lactonen herstellen lassen. Beispiele geeigneter Säuren sind Bernsteinsäure, Adipinsäure, Sebacinsäure, Phthalsäure, Isophthalsäure, Phthalsäureanhydrid, Tetrahydrophthalsäure, Maleinsäure, Maleinsäureanhydrid, Terephthalsäuredimethylester und Terephthalsäure-bisglykolester. Geeignete Lactone zur Herstellung dieser Esterdiole sind beispielsweise β-Propiolacton, γ-Butyrolacton, γ- und δ-Valerolacton, ε-Caprolacton, 3,5,5- und 3,3,5-Trimethylcaprolacton oder beliebige Gemische solcher Lactone.

Bei der Herstellung der Uretdiongruppen aufweisenden Härter (A) können auch aminofunktionelle Verbindungen eingesetzt werden. Beispiele für geeignete niedermolekulare aminofunktionelle Verbindungen sind aliphatische und cycloaliphatische Amine und Aminoalkohole mit primär und/oder sekundär gebundenen Aminogruppen, wie z. B. Cyclohexylamin, 2-Methyl-1,5-pentandiamin, Diethanolamin, Monoethanolamin, Propylamin, Butylamin, Dibutylamin, Hexylamin, Monoisopropanolamin, Diisopropanolamin, Ethylendiamin, 1,3-Diaminopropan, 1,4-Diaminobutan, Isophorondiamin, Diethylentriamin, Ethanolamin, Aminoethyl-ethanolamin, Diaminocyclohexan, Hexamethylendiamin, Methyliminobispropylamin, Iminobispropylamin, Bis(aminopropyl)piperazin, Aminoethylpiperazin, 1,2-Diaminocyclohexan, Triethylentetramin, Tetraethylenpentamin, Bis(4-amino-cyclohexyl)methan, Bis(4-amino-3-methylcyclohexyl)methan, Bis(4-amino-3,5-dimethylcyclohexyl)methan, Bis(4-amino-2,3,5-trimethylcyclohexyl)methan, 1,1-Bis(4-aminocyclohexyl)propan, 2,2-Bis(4-aminocyclohexyl)propan, 1,1-Bis(4-aminocyclohexyl)ethan, 1,1-Bis(4-aminocyclohexyl)butan, 2,2-Bis(4-aminocyclohexyl)butan, 1,1-Bis(4-amino-3-methylcyclohexyl)ethan, 2,2-Bis(4-amino-3-methylcyclohexyl)propan, 1,1-Bis(4-amino-3,5-dimethylcyclohexyl)ethan, 2,2-Bis(4-amino-3,5-dimethylcyclohexyl)propan, 2,2-Bis(4-amino-3,5-dimethylcyclohexyl)butan, 2,4-Diaminodicyclohexylmethan, 4-Aminocyclohexyl-4-amino-3-methylcyclohexylmethan, 4-Amino-3,5-dimethylcyclohexyl-4-amino-3-methylcyclohexylmethan und 2-(4-Aminocyclohexyl)-2-(4-amino-3-methylcyclohexyl)methan.

Bei der Herstellung der Uretdiongruppen aufweisenden Härter (A) können ggf. Lösemittel verwendet werden. Als Lösemittel für die Uretdiongruppen aufweisenden Härter (A) kommen alle flüssigen Substanzen in Frage, die nicht mit anderen Inhaltstoffen reagieren, z. B. Aceton, Methylethylketon, Ethylacetat, Butylacetat, Xylol, Schwerbenzol, wie die kommerziell erhältlichen Solvesso 100 und Solvesso 150, Propylenglykolmono-n-butylether, Dipropylenglykoldimethylether, Methoxypropylacetat, dibasische Ester oder Mischungen davon.

Die Uretdiongruppen aufweisenden Härter (A) sind im Wesentlichen frei von ionischen oder nicht ionischen, chemisch gebundenen hydrophilierenden Gruppen. Unter den ionischen hydrophilierenden Gruppen versteht der Fachmann Gruppen, die eine Fähigkeit zur Anionen- oder Kationenbildung aufweisen. Zur Anionen- oder Kationenbildung befähigte Gruppen sind diejenigen, die durch chemische Reaktion in eine anionische bzw. kationische Gruppe umgewandelt werden können, insbesondere durch Neutralisation.

Die Uretdiongruppen aufweisenden Härter (A) sind bevorzugt frei von zu Anionenbildung befähigten, Carboxylgruppen haltigen Polyolen oder Diolen wie z.B. Dihydroxycarbonsäuren, wie α,α-Dialkylolalkansäuren, insbesondere α,α-Dimethylolalkansäuren, wie 2,2-Dimethylolessigsäure, 2,2-Dimethylolpropionsäure, 2,2-Dimethylolbuttersäure, 2,2-Dimethylolpentansäure, Dihydroxybernsteinsäure, oder Polyhydroxysäuren, wie Glukonsäure. Weiterhin sind die Uretdiongruppen aufweisenden Härter (A) bevorzugt frei von zu Anion-Bildung befähigten, aminogruppenhaltigen Verbindungen wie beispielsweise α,Ω-Diaminovaleriansäure oder 2,4-Diamino-toluol-sulfonsäure. Die Uretdiongruppen aufweisenden Härter (A) sind ebenfalls bevorzugt frei von zu Anionenbildung befähigten, Sulfonsäuregruppen.

Darüber hinaus sind die Uretdiongruppen aufweisenden Härter (A) bevorzugt frei von zu Kationenbildung befähigten Verbindungen aus der Gruppe der tertiäre Amino- oder Ammoniumverbindungen, wie z.B. Tris (hydroxyalkyl) amine, N,N'-Bis (hydroxyalkyl) alkylamine, N-Hydroxyalkyldialkylamine, Trisaminoalkylamine, N,N'- Bisaminoalkylalkylamine, N-Aminoalkyldialkylamine, sowie Mischungen davon.

Die Uretdiongruppen aufweisenden Härter (A) sind ferner bevorzugt frei von nichtionisch hydrophilisierenden Verbindungen, wie zum Beispiel Polyalkylenoxidpolyetheralkoholen oder Polyalkylenoxidpolyetheraminen. Insbesondere sind die Uretdiongruppen aufweisenden Härter (A) bevorzugt frei von Polyethylenoxidpolyethern oder gemischten Polyalkylenoxidpolyethern, deren Alkylenoxideinheiten zu mindestens 30 Mol-% aus Ethylenoxideinheiten bestehen.

Bevorzugte Uretdiongruppen aufweisende Härter (A) haben einen freien NCO-Gehalt von weniger als 5 Gew.- % und einen Gehalt an Uretdiongruppen von 1 bis 18 Gew.- % (berechnet als C₂N₂O₂, Molekulargewicht 84 g/mol). Außer den Uretdiongruppen können die Härter (A) auch Isocyanurat-, Biuret-, Allophanat-, Urethan- und/oder Harnstoff-Strukturen aufweisen.

Die Zusammensetzung enthält ebenfalls mindestens ein Hydroxygruppen enthaltendes Polyol, welches mindestens eine chemisch gebundene Carbonsäuregruppe enthält (Komponente (B)).

Geeignete Polyole (B) können aus Polyesterpolyolen, Polyetherpolyolen, Polyurethanetherpolyolen, Polyurethanesterpolyolen, Polycaprolactonopolyolen, Polyetheresterpolyolen, Polycarbonatpolyolen, C₂₋₁₀-Kohlenwasserstoff mit mindestens zwei Hydroxylgruppen oder Mischungen davon ausgewählt werden, so lange solche Polyole mindestens eine chemisch gebundene Carbonsäuregruppen aufweisen. Bevorzugt sind die geeigneten Polyole (B) aus der Gruppe der Polyurethanetherpolyolen, Polyurethanesterpolyolen, Polycaprolactonopolyolen oder Polycarbonatpolyolen, Besonders bevorzugt sind Polyurethanesterpolyole (B) hergestellt aus 5 bis 80 Gew.-%, bevorzugt 10 bis 60 Gew.-% Isocyanaten (a1),
10 bis 80 Gew.-%, bevorzugt 40 bis 70 Gew.-% Polyolen (b2) und/oder aminofunktionellen Verbindungen mit einem mittleren Molgewicht Mn von mindestens 400 g/mol;
2 bis 15 Gew.-%, bevorzugt 3 bis 10 Gew.-% mindestens eine chemisch gebundene Carbonsäuregruppe aufweisende Ausgangskomponente (b3)
0 bis 20 Gew.-%, bevorzugt 1-10% Polyolen (b1),
0 bis 20 Gew.-% Verbindungen, die monofunktionell sind oder aktiven Wasserstoff unterschiedlicher Reaktivität enthalten,
und
0 bis 20 Gew.-% Verbindungen, die von (b1), (b2) und (b3) verschieden sind und mindestens zwei mit NCO-Gruppen reaktive Gruppen enthalten.

Als mindestens eine chemisch gebundene Carbonsäuregruppe aufweisende Ausgangskomponente (b3) für die Polyole (B) kommen solche Polyole, vorzugsweise Diole, infrage, die wenigstens eine Carbonsäuregruppe, im Allgemeinen 1 bis 3 Carbonsäuregruppen je Molekül enthalten. Beispiel hierfür sind Dihydroxycarbonsäuren, wie α,α-Dialkylolalkansäuren, insbesondere α,α-Dimethylolalkansäuren, wie 2,2-Dimethylolessigsäure, 2,2-Dimethylolpropionsäure, 2,2-Dimethylolbuttersäure, 2,2-Dimethylolpentansäure, Dihydroxybernsteinsäure, weiterhin Polyhydroxysäuren, wie Glukonsäure, oder Aminocarbonsäuren, wie beispielsweise α,Ω-Diaminovaleriansäure, und 2,4-Diamino-toluol-sulfonsäure. Es können auch Gemische der vorstehend beschriebenen Verbindungen zum Einsatz kommen.

Als mindestens eine chemisch gebundene Carbonsäuregruppe aufweisende Ausgangskomponente (b3) für die Polyole (B) besonders bevorzugt ist 2,2-Dimethylolpropionsäure. Alternativ können auch monohydroxyfunktionelle Verbindungen, die wenigstens eine Carbonsäuregruppe aufweisen, wie zum Beispiel Hydroxypivalinsäure oder Hydroxydecansäure eingesetzt werden.

Geeignete Polyole (B) sind Polyole die bevorzugt einen OH-Gehalt größer 1 Gew.-% (als OH-Gruppe auf Festgehalt berechnet, Molekulargewicht 17 g / mol) und bevorzugt ein zahlenmittleres Molekulargewicht Mn von 500 bis 20000 g/mol, bevorzugt von 500 bis 10000 g/mol, besonders bevorzugt von 500 bis 5000 g/mol, aufweisen.

Die Herstellung des erfindungsgemäß eingesetzten Polyurethanharzes erfolgt bevorzugt in der Weise, dass man eine nicht wässrige Harz-Vorstufe des Polyols (B) mit mindestens einem uretdiongruppenhaltigen Härter (A), basierend auf aliphatischen, (cyclo) aliphatischen, araliphatischen und/oder aromatischen Polyisocyanaten, welcher keine chemisch gebundene hydrophilisierende Gruppen enthält, in nicht-wässrigem System homogen vermischt. Anschließend werden die im Polyol (B) vorhandenen Carbonsäuregruppen bevorzugt zu mindestens 50 %, stärker bevorzugt 80 % bis 120 %, besonders bevorzugt 95 bis 105 % mit geeigneten Neutralisationsmitteln neutralisiert und anschließend mit entionisiertem Wasser dispergiert. Die Neutralisation kann vor, während oder nach dem Dispergierschritt erfolgen. Bevorzugt ist jedoch die Neutralisation vor der Wasserzugabe.

Geeignete Neutralisationsmittel sind beispielsweise Triethylamin, Dimethylaminoethanol, Dimethylcyclohexylamin, Triethanolamin, Methyldiethanolamin, Diisopropanolamin, Ethyldiisopropylamin, Diisopropylcyclohexylamin, N-Methylmorpholin, 2-Amino-2-methyl-1-propanol, Ammoniak oder andere gebräuchliche Neutralisationsmittel oder deren Neutralisationsgemische. Bevorzugt sind tert. Amine wie z.B. Triethylamin, Diisopropylhexylamin, besonders bevorzugt ist Dimethylethanolamin.

Gemäß der vorliegenden Erfindung sind die Neutralisationsmittel unter die Gruppe der Hilfs- uns Zusatzstoffen (D) zu rechnen.

Als Lösemittel unter (C) sind alle flüssigen Substanzen geeignet, die nicht mit anderen Inhaltstoffen reagieren. Bevorzugt sind Aceton, Methylethylketon, Ethylacetat, Butylacetat, Xylol, Schwerbenzol, wie die kommerziell erhältlichen Solvesso 100 und Solvesso 150, Propylenglykolmono-n-butylether, Dipropylenglykol dimethylether, Methoxypropylacetat, dibasischen Estern oder Mischungen davon. Gegebenenfalls kann das eingesetzte Lösemittel anschließend destillativ entfernt werden.

Erfindungsgemäß können die in der Lack- bzw. Klebstofftechnologie üblichen Zusatzstoffe (D), wie Verlaufsmittel, z. B. Polysilicone oder Acrylate, Lichtschutzmittel, z. B. sterisch gehinderte Amine, Katalysatoren, zum Beispiel Zinn (II) 2-ethylhexyloctoat oder Dibutylzinndilaurat oder andere Hilfsmittel, wie sie z. B. in EP 0 669 353 beschrieben wurden, in einer Gesamtmenge von bevorzugt 0,05 bis 5 Gew.-% enthalten sein. Füllstoffe und Pigmente wie zum Beispiel Titandioxid können in einer Menge bis zu 50 Gew.-% der wässrigen Zusammensetzung zugesetzt werden.

In einer bevorzugten Ausführungsform enthält oder besteht die wässrige uretdiongruppenhaltige Zusammensetzungen aus
10-50 Gew.-%, bevorzugt 20-40 Gew.-% A) bezogen auf die Summe A+B
10-80 Gew.-%, bevorzugt 40-70 Gew.-% B) bezogen auf die Summe A+B
0 bis 20 Gew.-%, bevorzugt 1 bis 15 Gew.-%, C) bezogen auf die Summe von A+ B + D
0-70 Gew.-% bevorzugt 2-50 Gew.-% D) bezogen auf A + B + D.

### Beispiele:

### Eingesetzte Rohstoffe:

Polyester 1: ein aliphatischer Polyester hergestellt aus 1419 g Trimethylolpropan, 4773 g Neopentylglykol, 3093 g Adipinsäure, 4101 g Isophthalsäure und 267 g 1,2-Propylenglykol mit einer Säurezahl < 3 mg KOH / g und einer OH-Zahl von 181 mg KOH / g.

### Verwendete analytische Methoden:

Sämtliche Viskositätsmessungen erfolgten mit einem Physica MCR 51 Rheometer der Fa. Anton Paar Germany GmbH (DE) nach DIN EN ISO 3219:1994-10.
Die Bestimmung der NCO-Gehalte erfolgte titrimetrisch nach DIN EN ISO 11909:2007-05.
Die Bestimmung der OH-Zahlen erfolgte titrimetrisch nach DIN EN ISO 4629-2:2015-02
Die Bestimmung der Säurezahlen titrimetrisch nach DIN EN ISO 2114:2002-06
Festgehalt - Bestimmung erfolgte mittels Umluftofen nach DIN EN ISO 3251:2008-06, Verfahren B
Die Bestimmung der mittleren Teilchengröße (MTG) erfolgte mit einem Zetasizer Nano der Fa. Malvern (DE) nach DIN ISO 13321:2004-10
pH-Wert Bestimmung erfolgte mit einem pH-Meter nach DIN ISO 976:2008-07 in Verdünnung 1:4 mit destillierten Wasser.
Die Rest-Monomeren Gehalte wurden nach DIN EN ISO 10283 gaschromatographisch mit internem Standard gemessen.
Die Messung der Pendelhärte erfolgte auf einer normierten Coil-Prüftafel (Coil Coating schwarz - CS 200570, Fa. Heinz Zanders Prüf-Blech-Logistik) nach DIN EN ISO 1522:2007-04 mit einem König Pendel.
Die Bestimmung der Chemikalienbeständigkeit erfolgte auf einer normierten Coil-Prüftafel (Coil Coating schwarz - CS 200570, Fa. Heinz Zanders Prüf-Blech-Logistik). Ein mit der Prüfsubstanz (Xylol bzw. Wasser) getränkter Wattebausch wurde auf die Lackoberfläche gelegt und mit einem Uhrglas abgedeckt. Nach der angegebenen Belastungszeit wurde die mit Prüfsubstanz getränkte Watte entfernt, die belastete Stelle abgetrocknet und sofort abgemustert. Beurteilt wurden Erweichung bzw. Verfärbung der Lackoberfläche. Die Beurteilung wurde in Anlehnung DIN EN ISO 4628-1 wie folgt vorgenommen:
0 keine, d. h. keine erkennbaren Schäden
1 sehr wenige, d. h. kleine, gerade noch signifikante Anzahl von Schäden
2 wenige, d. h. kleine, aber signifikante Anzahl von Schäden
3 mäßig viele Schäden
4 Schäden in beträchtlicher Anzahl
5 sehr viele Schäden
Wenn nicht anders hingewiesen, beziehen sich alle % Angaben auf Gewichtsprozente.

### Herstellung eines Uretdiongruppen enthaltenden Vernetzers (Vernetzer 1, Herstellungsbeispiel)

1000 g (4,50 mol) Isophorondiisocyanat (IPDI) wurden bei Raumtemperatur unter trockenem Stickstoff und Rühren nacheinander mit 10 g (1 %) Triisodecylphosphit sowie 20 g (2 %) 4-Dimethylaminopyridin (DMAP) als Katalysator versetzt. Nach 20 h wurde die Reaktionsmischung, die einen NCO-Gehalt von 28,7 %, entsprechend einem Oligomerisierungsgrad von 21,8 % aufwies, ohne vorherige Zugabe eines Katalysatorgiftes mit Hilfe eines Dünnschichtverdampfers bei einer Temperatur von 160°C und einem Druck von 0,3 mbar von flüchtigen Bestandteilen befreit. Man erhielt ein hellgelbes Uretdionpolyisocyanat mit einem Gehalt an freien NCO-Gruppen von 17,0 %, einem Gehalt an monomerem IPDI von 0,4 % und einer Viskosität von mehr als 200.000 mPas.

337 g 1,4-Butandiol, 108 g 2-Ethylhexanol und 569 g ε-Caprolacton wurden bei Raumtemperatur unter trockenem Stickstoff vermischt, mit 0,3 g Zinn(II)octoat versetzt, 5 h bei 160°C gerührt und anschließend auf Raumtemperatur abgekühlt. Zu dieser Mischung wurden dann 1850 g des vorstehend beschriebenen uretdiongruppenhaltigen Polyisocyanates auf Basis von IPDI, erwärmt auf 80°C innerhalb von 30 min zugegeben. Das Reaktionsgemisch wurde bei einer Temperatur von max. 100°C gerührt bis der NCO-Gehalt des Reaktionsgemisches nach 7 bis 8 h auf einen Wert von 0,8% abgesunken ist. Zum Erstarren wurde das Reaktionsgemisch auf ein Blech gegossen, zerkleinert und anschließend im Aceton gelöst, sodass eine Lösung mit 70 Gew.-% Festanteil entstand.

### Beispiele 1-3 (erfindungsgemäß)

### Beispiel 1

**Tabelle 1**

| | | Einwaage (g) |
|---|---|---|
| Teil 1 | POLYESTER 1 | 875 |
| | DIMETHYLOLPROPIONSÄURE | 55 |
| | ZINN (II) 2-ETHYLHEXANOAT | 1,4 |
| | ACETON | 471 |
| | | |
| Teil 2 | HEXAMETHYLENDIISOCYANAT | 169 |
| | | |
| Teil 3 | VERNETZER 1 (70% in ACETON) | 458 |
| | | |
| Teil 4 | DIMETHYLETHANOLAMIN | 36 |
| | | |
| Teil 5 | DEST. WASSER | 1384 |

Teil 1 aus der Tabelle 1 wurde in eine Rührapparatur unter Stickstoff eingewogen und 1 Std. bei 60°C homogenisiert. Danach wurde Teil 2 bei 55 °C so zudosiert, dass durch die Exothermie ein Rückfluss entstanden ist. Die Reaktionsmischung wurde unter Rückfluss gehalten bis der NCO-Gehalt unter 0,05% fiel. Anschließend wurde die Reaktionsmischung auf 50°C abgekühlt, Teil 3 wurde zugeben und 1 Std. bei 50°C eingerührt. Danach wurde Teil 4 zugeben und 30 Min. verrührt. Zum Schluss wurde in 15 Min. Teil 5 eingerührt und Aceton im Vakuum abdestilliert.
Es wurde eine Dispersion mit folgenden Kenndaten erhalten:

| | |
|---|---|
| Festgehalt | 49,8 Gew.-% |
| Säurezahl (100%ig) | 20 mg KOH/g |
| OH-Gehalt (100%ig, berechnet) | 1,9 Gew.-% |
| Mittlere Teilchengröße | 143 nm |
| Viskosität | 640 mPas |
| pH-Wert | 7,8 |

Die Dispersion blieb über 14 Monate bei 23°C stabil.

### Beispiel 2

Beispiel 2 wurde wie Beispiel 1 hergestellt, mit der Ausnahme, dass 718 g der Vernetzer 1 - Lösung und 38 g Dimethylethanolamin eingesetzt wurden. Die so erhaltene Dispersion hat folgende Kenndaten:

| | |
|---|---|
| Festgehalt | 42,6 Gew.-% |
| Säurezahl (100%ig) | 18 mg KOH/g |
| OH-Gehalt (100%ig, berechnet) | 1,7 Gew.-% |
| Mittlere Teilchengröße | 180 nm |
| Viskosität | 850 mPas |
| pH-Wert | 8,0 |

Die Dispersion blieb über 14 Monate bei 23°C stabil.

### Beispiel 3

Beispiel 3 wurde wie Beispiel 1 hergestellt, mit der Ausnahme, dass folgendes Mengengerüst aus Tabelle 2 verwendet wurde:

**Tabelle 2**

| | | Einwaage (g) |
|---|---|---|
| Teil 1 | POLYESTER 1 | 759 |
| | DIMETHYLOLPROPIONSÄURE | 60 |
| | ZINN (II) 2-ETHYLHEXANOAT | 1,3 |
| | ACETON | 667 |
| | | |
| Teil 2 | HEXAMETHYLENDIISOCYANAT | 181 |
| | | |
| Teil 3 | VERNETZER 1 (70% in ACETON) | 1043 |
| | | |
| Teil 4 | DIMETHYLETHANOLAMIN | 42 |
| | | |
| Teil 5 | DEST. WASSER | 1690 |

Die so erhaltene Dispersion hat folgende Kenndaten:

| | |
|---|---|
| Festgehalt | 40,0 Gew.-% |
| Säurezahl (100%ig) | 17 mg KOH/g |
| OH-Gehalt (100%ig, berechnet) | 1,2 Gew.-% |
| Mittlere Teilchengröße | 261 nm |
| Viskosität | 320 mPas |
| pH-Wert | 7,6 |

Die Dispersion blieb über 10 Monate bei 23°C stabil.

### Beispiel 4 (Vergleich)

1000 g (4,50 mol) Isophorondiisocyanat (IPDI) wurden bei Raumtemperatur unter trockenem Stickstoff und Rühren nacheinander mit 10 g (1 %) Triisodecylphosphit sowie 20 g (2 %) 4-Dimethylaminopyridin (DMAP) als Katalysator versetzt. Nach 20 h wurde die Reaktionsmischung, die einen NCO-Gehalt von 28,7 %, entsprechend einem Oligomerisierungsgrad von 21,8 % aufwies, ohne vorherige Zugabe eines Katalysatorgiftes mit Hilfe eines Dünnschichtverdampfers bei einer Temperatur von 160°C und einem Druck von 0,3 mbar von flüchtigen Bestandteilen befreit.

Man erhielt ein hellgelbes Uretdionpolyisocyanat mit einem Gehalt an freien NCO-Gruppen von 17,0 % und einer Viskosität von mehr als 200.000 mPas.

219 g des vorstehend beschriebenen uretdiongruppenhaltigen Polyisocyanates auf Basis von IPDI mit einem Gehalt an freien Isocyanatgruppen von 17,0 % und einem rechnerisch bestimmten Gehalt an Uretdiongruppen von 20,8 % wurden unter trockenem Stickstoff auf 80°C wurden in eine Ruhrapparatur unter Stickstoff eingewogen und bei Raumtemperatur in 849 g Aceton gelöst. Danach wurden zu der homogenen Lösung 22,9 g Dimethylolpropionsäure und 2,11 g Zinn (II) 2-Ethylhexanoat so zudosiert, dass durch die Exothermie ein Rückfluss entstanden ist. Die Reaktionsmischung wurde unter Rückfluss gehalten bis der NCO-Gehalt von 2,2 % erreicht wurde. Anschließend wurden zu der Reaktionsmischung 265,9 g Polyester 1 zugeben und man rührte unter Rückfluss bis der NCO-Gehalt des Reaktionsgemisches auf einen Wert von unter 0,1 % abgesunken war. auf 50°C abgekühlt. Nach Abkühlen auf 23°C wurden zu der Reaktionsmischung 16,8 g Dimethylethanolamin zugegeben und 30 Min. verrührt. Zum Schluss wurden in 15 Min. 1451 g destilliertes Wasser eingerührt und Aceton im Vakuum abdestilliert. Es wurde eine Dispersion mit folgenden Kenndaten erhalten:

| | |
|---|---|
| Festgehalt | 37,62 Gew.-% |
| Mittlere Teilchengröße | 91 nm |
| Viskosität | 30 mPas |
| pH-Wert | 8,0 |

Diese Dispersion zeigte nach 6 Monaten bei 23°C Bodensatz und gelierte vollständig nach 6 Tagen Lagerung bei 40°C.

### Lacktechnische Prüfungen:

### Beispiele 5-7 (erfindungsgemäß)

Es wurden Klarlacke aus folgenden Zusammensetzungen hergestellt (alle Einwaagen in g):

**Tabelle 3**

| Beispiel | 5 | 6 | 7 |
|---|---|---|---|
| Zusammensetzung aus Beispiel 1 | 10,00 | | |
| Zusammensetzung aus Beispiel 2 | | 10,00 | |
| Zusammensetzung aus Beispiel 3 | | | 10,00 |

Die Dispersionen wurden in einem Speed Mixer bei 2000 U/min 1 Minute lang vermischt und auf eine Coil-Blechplatte mit einem Rakel mit einer Schichtdicke von 180 µm (nass) aufgetragen. Die Platten mit den aufgetragenen Nasslacken wurden 5 min bei Raumtemperatur abgelüftet und anschließend 30 min bei 180 °C eingebrannt und 4 Tage bei Raumtemperatur gelagert. Die gelagerten Filme wurden anwendungstechnisch beurteilt (Tabelle 4).

**Tabelle 4**

| Beispiel | 5 | 6 | 7 |
|---|---|---|---|
| Aussehen des Lackes (Sichtprüfung) | i.o. | i.o. | i.o. |
| Schichtdicke (trocken, µ) | 50 | 60 | 50 |
| Pendelhärte (s) | 95 | 145 | 200 |
| Xylolbeständigkeit (5 Minuten) | 3 | 3 | 3 |
| Entionisiertes Wasser (1 Stunde) | 1 | 1 | 0 |

Wie aus der Tabelle 4 ersichtlich ist, ergeben die erfindungsgemäßen Uretdion-haltigen Dispersionen harte und beständige Lacke.

## Patentansprüche

1. Wässrige uretdiongruppenhaltige Zusammensetzungen, umfassend oder bestehend aus,
(A) mindestens einen uretdiongruppenhaltigen Härter, basierend auf aliphatischen, cycloaliphatischen, araliphatischen und/oder aromatischen Polyisocyanaten, welcher keine chemisch gebundenen hydrophilierenden Gruppen enthält;
(B) mindestens ein Hydroxygruppen enthaltendes Polyol, welches mindestens eine chemisch gebundene Carbonsäuregruppe enthält;
(C) gegebenenfalls Lösemittel; und
(D) gegebenenfalls Hilfs- und Zusatzstoffe;
wobei das Mengenverhältnis der Komponenten (A) und (B) so bemessen ist, dass das molare Verhältnis von den als Uretdion vorliegenden NCO-Gruppen des Härters (A) zu NCOreaktiven Gruppen des Polyols (B) 3,0 : 0,5 bis 0,5 : 3,0 beträgt und wobei A und B als physikalische Mischung vorliegen.

2. Zusammensetzung nach Anspruch 1, **dadurch gekennzeichnet, dass** der mindestens eine uretdiongruppenhaltige Härter (A) durch Umsetzen von monomeren Isocyanaten umfassend oder bestehend aus mindestens einem monomeren Isocyanat ausgewählt aus Tetramethylen-diisocyanat, Cyclohexan-1,3- und 1,4-diisocyanat, Pentamethylendiisocyanat, Hexamethylendiisocyanat (HDI), 1-Isocyanato-3,3,5-trimethyl-5-isocyanatomethylcyclohexan (Isophorondiisocyanat IPDI), Dicyclohexylmethan-2,4'- und/oder 4,4'-diisocyanat, Tetramethylxylylendiisocyanat (TMXDI), Triisocyanatononan, Toluylendiisocyanat (TDI), Diphenylmethan-2,4'-und/oder 4,4'-diisocyanat (MDI), Triphenylmethan-4,4'-diisocyanat oder Naphthylen-1,5-diisocyanat oder Mischungen davon erhalten wurde.

3. Zusammensetzung nach Anspruch 1 oder 2, **dadurch gekennzeichnet, dass** als Einsatzstoffe für den mindestens eine uretdiongruppenhaltigen Härter A hydroxylgruppenhaltige Monomere und/oder Polymere eingesetzt werden.

4. Zusammensetzung nach einem der vorstehenden Ansprüchen, **dadurch gekennzeichnet, dass** der mindestens eine uretdiongruppenhaltige Härter A einen freien NCO-Gehalt von weniger als 5 Gew.-% und einen Gehalt an Uretdiongruppen von 1 bis 18 Gew.-% (berechnet als C₂N₂O₂, Molekulargewicht 84 g/mol) aufweist.

5. Zusammensetzung nach einem der vorstehenden Ansprüchen, **dadurch gekennzeichnet, dass** die wässrige Zusammensetzung eine Säurezahl von 1 bis 100 mg KOH/g aufweist.

6. Zusammensetzung nach einem der vorstehenden Ansprüchen, **dadurch gekennzeichnet, dass** das mindestens eine Hydroxygruppen enthaltende Polyol (B) durch Umsetzen von Hydroxy- oder Aminocarbonsäuren umfassend oder bestehend aus mindestens einer Carbonsäure ausgewählt aus 2,2-Dimethylolessigsäure, 2,2-Dimethylolbuttersäure, 2,2-Dimethylolpentansäure, Dihydroxybernsteinsäure, α,Ω-Diaminovaleriansäure, oder Mischungen davon, bevorzugt aus Dimethylolpropionsäure oder Hydroxypivalinsäure, erhalten wurde.

7. Zusammensetzung nach einem der vorstehenden Ansprüchen, **dadurch gekennzeichnet, dass** das mindestens eine Hydroxygruppe enthaltende Polyol (B) einen OH-Gehalt größer 1 Gew.-% (als OH-Gruppe auf Festgehalt berechnet, Molekulargewicht 17 g / mol) und ein zahlenmittleres Molekulargewicht Mn von 500 bis 20000 g/mol aufweist.

8. Zusammensetzung nach einem der vorstehenden Ansprüche, **dadurch gekennzeichnet, dass** das Lösemittel ausgewählt ist aus Aceton, Methylethylketon, Ethylacetat, Butylacetat, Xylol, Schwerbenzol, Propylenglykolmono-n-butylether, Dipropylenglykol dimethylether, Methoxypropylacetat, dibasischen Estern oder Mischungen davon.

9. Zusammensetzung nach einem der vorstehenden Ansprüche, **dadurch gekennzeichnet, dass** die Hilfs- und Zusatzstoffe ausgewählt sind aus Verlaufsmitteln, Lichtschutzmitteln, Katalysatoren, Füllstoffen und Pigmenten oder Mischungen davon.

10. Zusammensetzung nach einem der vorstehenden Ansprüche, **dadurch gekennzeichnet, dass** die Summe der Gewichts-Anteile von (A), (B) und (D) 30 bis 60 Gew.-%, bezogen auf den Feststoffgehalt der gesamten wässrigen Zusammensetzung, beträgt.

11. Verfahren zur Herstellung einer Polyurethanschicht, umfassend die Schritte
i) Bereitstellen einer wässrigen uretdiongruppenhaltigen Zusammensetzung gemäß einem der Ansprüche 1 bis 10;
ii) Aufbringen der unter i) erhaltenen Mischung auf ein Substrat;
iii) Trocknen der Mischung aus Schritt ii), und
iv) Härten der Mischung aus Schritt iii) unter Wärmezufuhr von 40 °C bis 180 °C für bis zu 180 Minuten.

12. Verfahren nach Anspruch 11, **dadurch gekennzeichnet, dass** die wässrige uretdiongruppenhaltige Zusammensetzung durch Vermischen des uretdiongruppenhaltigen Härters A mit dem mindestens eine Hydroxygruppe enthaltenden Polyol B in Abwesenheit von Wasser und anschließender Dispergierung mit Wasser erhalten wurde.

13. Polyurethanschicht, insbesondere Polyurethanfilm, erhältlich durch ein Verfahren nach Anspruch 11 oder 12.

14. Ein Substrat, welches mit der Polyurethanschicht nach Anspruch 13 beschichtet oder verklebt ist.
